(19)

Europäisches
Patentamt
European
Patent Office
Office européen
des brevets

(11) **EP 2 060 894 A1**

(12) **EUROPEAN PATENT APPLICATION**
published in accordance with Art. 153(4) EPC

(43) Date of publication:
**20.05.2009 Bulletin 2009/21**

(21) Application number: **07806744.4**

(22) Date of filing: **05.09.2007**

(51) Int Cl.:
**G01L 5/16** (2006.01)

(86) International application number:
**PCT/JP2007/067301**

(87) International publication number:
**WO 2008/044404 (17.04.2008 Gazette 2008/16)**

(84) Designated Contracting States:
**DE FR GB**
Designated Extension States:
**AL BA HR MK RS**

(30) Priority: **11.10.2006 JP 2006277059**

(71) Applicant: **Nitta Corporation**
**Osaka-shi,**
**Osaka 556-0022 (JP)**

(72) Inventor: **MORIMOTO, Hideo**
**Yamatokoriyama-shi, Nara 639-1085 (JP)**

(74) Representative: **Intes, Didier Gérard André et al**
**Cabinet Beau de Loménie**
**158, rue de l'Université**
**75340 Paris Cedex 07 (FR)**

(54) **STRAIN GAUGE SENSOR**

(57) A strain gauge type sensor of the present invention has: a first flange having four flexible portions; and a second flange which is disposed so as to face the first flange and has four flexible portions. A connection member formed at a central portion of each flexible portion of the first flange is connected to a corresponding connection member formed at a central portion of each flexible portion of the second flange. On the under surface of the first flange fixed are groups of strain gauges: R11 to R14; R21 to R24; R31 to R34; and R41 to R44. The strain gauges of each group are arranged in a line. Sets each containing: four strain gauges arranged in a line; a flexible portion of the first flange; a flexible portion of the second flange; and connection members, are disposed at intervals of 90 degrees about a Z-axis and at a same distance from the Z-axis.

FIG.3

**EP 2 060 894 A1**

**Description**

Technical Field

The present invention relates to a strain gauge type sensor capable of detecting multi axis force or the like.

Background Art

Patent document 1 discloses a six-axis sensor having a first member and a second member, each of which is a disk-shaped flange. Each of the first member and the second member has four diaphragms, and the diaphragms of the first member respectively face the diaphragms of the second member. On each diaphragm, eight strain gauges are disposed. The strain gauges are connected to one another by wires to form bridge circuits. A force and moment is detected based on a change in resistance value of each strain gauge.
Patent document 1: Japanese Unexamined Patent Publication No. 31062/2005 (Tokukai 2005-31062)

Disclosure of the Invention

Problems to be Solved by the Invention

However, in the case where bridge circuits for detection are provided individually for each of the forces in an X-axis direction, a Y-axis direction, and a Z-axis direction, complexity is increased in the circuitry configuration since, in addition to the bridge circuits, lands for fixing thereto lead wires from each bridge circuit should be taken into consideration. Particularly, in order to downsize a sensor, the above-mentioned circuit configuration has to be implemented within a small area, though, it is difficult. Therefore, it is preferable to minimize the number of strain gauges, to simplify the circuitry configuration.
Therefore, an object of the present invention is to provide a strain gauge type sensor capable of achieving downsizing.
Means for Solving the Problems and Effects of the Invention
A strain gauge type sensor of the present invention includes: a first member having a first flexible portion where two or four strain gauges are arranged in a line on one plane; a second member having a second flexible portion facing the first flexible portion; and a connection member which connects the first flexible portion with the second flexible portion. The sensor senses: a force in a direction parallel to a direction in which the two or four strain gauges are arranged on the plane; and a force in a direction perpendicular to the plane, based on a change in a resistance value of each of the two or four strain gauges.
In this configuration, the use of the two or four strain gauges arranged on the one plane makes it possible to detect (i) a force in the direction parallel to the direction in which the two or four strain gauges are arranged on the plane, and (ii) a force in the direction perpendicular to the plane. Accordingly, there is no need to provide strain gauges for detection individually for each of the forces in the two directions. The use of the two or four strain gauges in this way reduces the number of strain gauges for detecting the forces in the two directions. As a result, the circuit configuration is simplified, including a bridge circuit and a land for fixing thereto lead wires from the bridge circuit. This facilitates downsizing of the sensor.
The strain gauge type sensor of the present invention may be configured so that: an outer diameter of the connection member is smaller than that of the first flexible portion; and each of the two or four strain gauges is disposed at a position corresponding to an outer end of the first flexible portion or an outer end of the connection member.
In this configuration, each strain gauge is disposed at a position where a greatest strain occurs in the first flexible portion, and therefore sensor sensitivity is improved.
The strain gauge type sensor of the present invention may be configured so that the two or four strain gauges are arranged symmetrically with respect to a central position of the first flexible portion.
The strain gauge type sensor of the present invention may include several sets, each containing: the two or four strain gauges, the first flexible portion, the second flexible portion and the connection member; and has a configuration such that: the several sets each containing the two or four strain gauges, the first flexible portion, the second flexible portion, and the connection member, are disposed at equiangular intervals about a central point in the plane and at a same distance from the central point.
In this configuration, it is possible to detect multi axis force, and to detect forces/moments along/about multiple axes respectively.
In the strain gauge type sensor of the present invention, each of the intervals may be 90 degrees.
In this configuration, it is possible to detect force components and moments along three axes orthogonal to one another.

The strain gauge type sensor of the present invention may be configured so that the several sets each containing the two or four strain gauges and the first flexible portion are respectively disposed at positions corresponding to: a positive X-axis, a positive Y-axis, a negative X-axis, and a negative Y-axis, where the X- and Y-axes have their origin at the central point.

In this configuration, it is possible to detect forces/moments along/about the X- and Y-axes having their origin at the central point in the plane.

The strain gauge type sensor of the present invention may be configured so that: the two or four strain gauges disposed at the position corresponding to each of the positive X-axis and the negative X-axis are arranged in a direction orthogonal to the X-axis; and the two or four strain gauges disposed at the position corresponding to each of the positive Y-axis and the negative Y-axis are arranged in a direction orthogonal to the Y-axis.

In this configuration, it is possible to easily detect forces/moments along/about the X- and Y-axes having their origin at the central point in the plane.

In the strain gauge type sensor of the present invention, each of the intervals may be 120 degrees.

In this configuration, the number of electrodes disposed on the plane, or the number of flexible portions of the first member and the second member is less than the case of 90 degree-intervals. This decreases the production cost.

The strain gauge type sensor of the present invention may be configured so that the several sets each containing the two or four strain gauges and the first flexible portion are respectively disposed at: a position corresponding to a first line being at 30 degrees from a positive X-axis to a negative Y-axis; a position corresponding to a second line being at 30 degrees from a negative X-axis to the negative Y-axis; and a position corresponding to a positive Y-axis, where the X- and Y-axes have their origin at the central point.

The strain gauge type sensor of the present invention may be configured so that: the two or four strain gauges disposed at the position corresponding to the first line are arranged in a direction orthogonal to the first line; the two or four strain gauges disposed at the position corresponding to the second line are arranged in a direction orthogonal to the second line; and the two or four strain gauges disposed at the position corresponding to the positive Y-axis are arranged in a direction orthogonal to the Y-axis.

Best Mode for Carrying Out the Invention

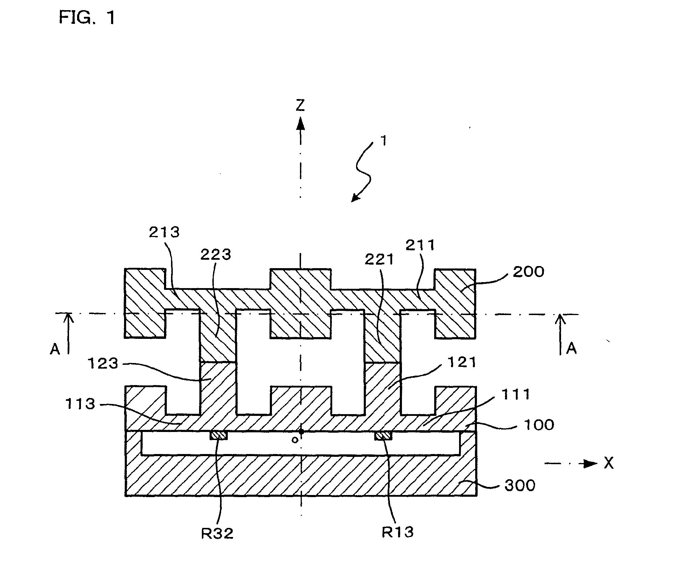

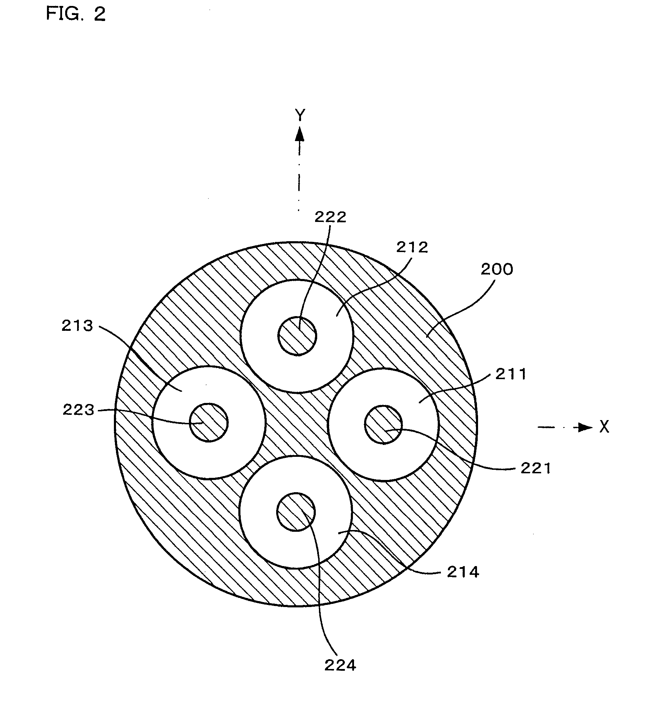

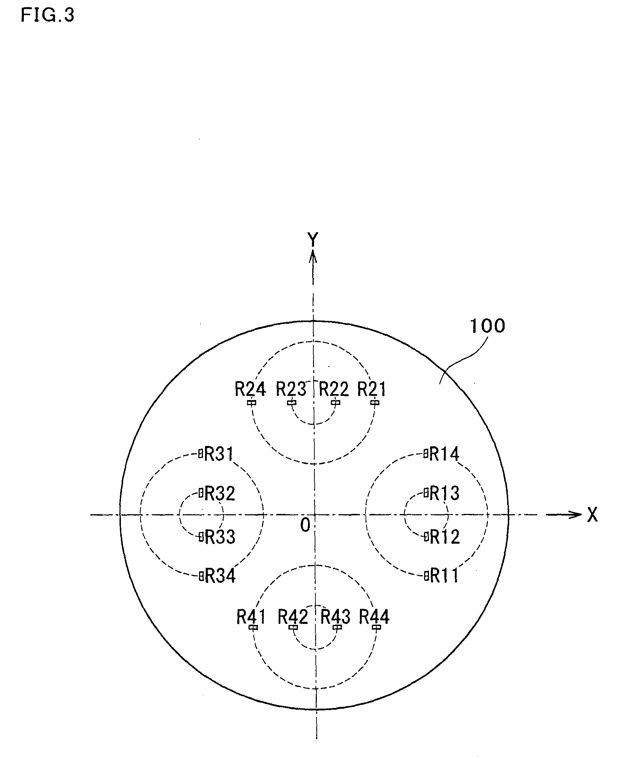

The following describes a preferred embodiment of the present invention, with reference to the accompanying drawings. FIG. 1 is a longitudinal cross-sectional front view, passing through a center, of a strain gauge type sensor of a first embodiment of the present invention. FIG. 2 is a cross-sectional view taken along line A-A in FIG. 1. FIG. 3 is a diagram showing an arrangement of strain gauges.

The strain gauge type sensor 1 of FIG. 1 has: a first flange 100 fixed to a fixation member 300 having adequate rigidity; and a second flange 200 disposed so as to face the first flange 100. The fixation member 300 is disk-shaped and has a top surface whose inner portion is recessed. The fixation member 300 is constructed so as to support the first flange 100 with the peripheral portion thereof. Each of the first flange 100 and the second flange 200 is a disk-shaped flange made of metal or the like. To the first flange 100, four thin flexible portions 111 to 114 are provided. At central portions of the flexible portions 111 to 114, connection members 121 to 124 are formed, respectively. In the same way, to the second flange 200, four thin flexible portions 211 to 214 are provided. At central portions of the flexible portions 211 to 214, connection members 221 to 224 are formed, respectively (see FIG. 2).

The connection members 121 to 124 are respectively connected to the connection members 221 to 224 by appropriate means such as bolts or the like, so that the flexible portions 111 to 114 and the connection members 121 to 124 of the first flange 100 are approximately symmetrical to the flexible portions 211 to 214 and the connection members 221 to 224 of the second flange 200, respectively. Here, since the connection members 121 to 124 are respectively connected to the connection members 221 to 224 firmly, it is possible to regard the first flange 100 and the second flange 200 as being an integrated member.

As shown in FIG. 3, the flexible portions 111 to 114 of the first flange 100 are respectively disposed on: a positive X-axis; a positive Y-axis; a negative X-axis; and a negative Y-axis. A plurality of strain gauges R11 to R14, R21 to R24, R31 to R34, and R41 to R44 arranged on one plane are disposed on the under surface of the first flange 100, which surface faces the recessed portion of the fixation member 300.

Each of the flexible portions 111 to 114 of the first flange 100 has four strain gauges arranged in a line. The four strain gauges of each of the flexible portions 111 to 114 are arranged as shown in FIG. 3. That is, in each of the flexible portions 111 and 113 respectively disposed on the positive X-axis and the negative X-axis, four strain gauges are positioned at the outer and inner edges of the thin portion so as to line up parallel to the Y-axis, on a line bisecting the thin portion. Meanwhile, in each of the flexible portion 112 and 114 respectively disposed on the positive Y-axis and the negative Y-axis, four strain gauges are positioned at the outer and inner edges of the thin portion so as to line up parallel to the X-axis, on a line bisecting the thin portion. In other words, the strain gauges are arranged in the following manner. In the flexible portion 111, the strain gauges R11 and R12 are line-symmetric to the strain gauges R13 and R14 with respect to the X-axis; and in the flexible portion 113, the strain gauges R31 and R32 are line-symmetric to the strain gauges R33 and R34 with respect to the X-axis. Meanwhile, in the flexible portion 112, the strain gauges R21 and R22 are line-symmetric to the strain gauges R23 and R24 with respect to the Y-axis; and, in the flexible portion 114, the strain gauges R41 and R42 are line-symmetric to the strain gauges R43 and R44 with respect to the Y-axis. Thus, in the flexible portions 111 to 114, each strain gauge is attached to a position in which a largest strain occurs. Note that lead wires of the strain gauges are not illustrated in the drawings.

In this manner, the strain gauge type sensor 1 has four sets each of which contains: four strain gauges, a flexible portion of the first flange 100, a flexible portion of the second flange 200, and connection members. These sets, each containing four strain gauges, a flexible portion of the first flange 100, a flexible portion of the second flange 200, and connection members, are disposed at intervals of 90 degrees about a Z-axis and at the same distance from the Z-axis.

As each strain gauge, a metal foil strain gauge or a metal wire strain gauge is used. A strain gauge is a kind of resistor, and is a detecting element to be used in a state of being attached to where strain occurs. Strain ε is measured by use of a change in resistance value caused by the occurrence of strain. In general, such a gauge has a proportional characteristic in which its resistance value increases to strain ε due to tension while its resistance value decreases to strain ε due to compression. Normally, such a gauge is used within an elastic region of the material in which stress σ is proportional to strain ε. Also in this embodiment, the strain gauges are used within the elastic region of the first flange 100.

Here, each strain gauge may be a gauge produced by forming, on a typical resin base, a pattern from metal foil. Alternatively, each strain gauge may be produced, using a metal film, on an insulating film made of silicon oxide or the like formed on the under surface of the first flange. Such a metal film includes: a metal film of alloy including chromium, nickel, or the like; and a metal film of chromium oxide or the like. A strain gauge of this type can be formed in a single process with a sputtering apparatus, using photolithography techniques, when a surface on which the strain gauge is formed is a flat plane. Therefore, such a strain gauge is suitable for mass production. In the meantime, as an element for detecting strain, a piezoresistive element, a pressure-sensitive resistor, or pressure-sensitive resistive ink may be used, for example, but not limited thereto as long as it is an element for detecting strain.

As described above, the flexible portions 111 to 114 are formed in the first flange 100 and the flexible portions 211 to 214 are formed in the second flange 200. Therefore, upon application of a force to the second flange 200, the force is transmitted to the flexible portions 111 to 114 via the connection members 121 to 124 and the connection members 221 to 224. As a result, strain occurs at the flexible portions 111 to 114 in accordance with the intensity and direction of the force in a three-dimensional space. Accordingly, the strain gauge type sensor 1 functions as a six-axis force sensor for measuring forces along three axes orthogonal to one another in the three-dimensional space and moments about the respective axes.

The following describes the principle of detecting a force and a moment, for each axis. The following assumes that a force or moment is applied to the second flange 200 with the first flange fixed.

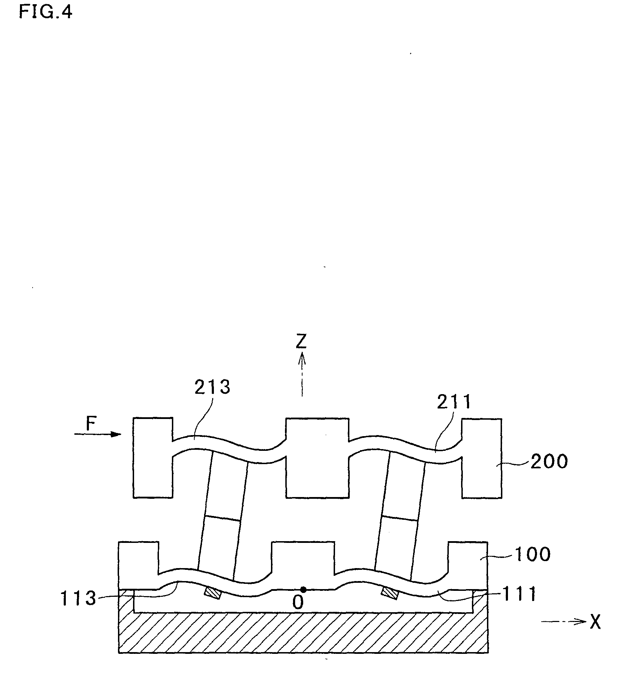

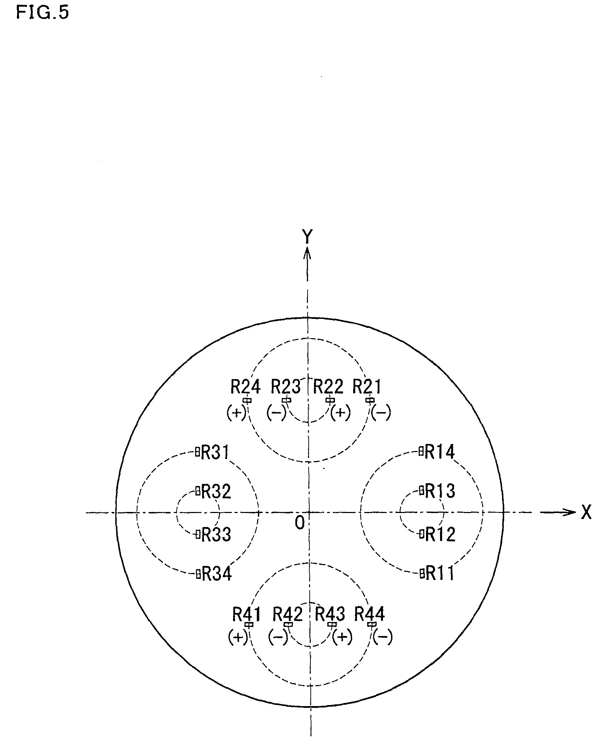

FIG. 4 shows the state of the strain gauge type sensor 1 to which an X-axis force Fx (force in the X-axis direction) is applied. In this situation, the flexible portions 111 to 114 of the first flange 100 and the flexible portions 211 to 214 of the second flange 200 are deformed as illustrated, and strain is detected. FIG. 5 shows a change in resistance value of each strain gauge. In the figure, (+) represents an increase in resistance value resulting from detection of tension strain; and (-) represents a decrease in resistance value resulting from detection of compression strain. Each strain gauge without either sign shows that very little or no strain occurs and there is very little or no change in its resistance value.

No description is provided for the case of applying a Y-axis force Fy, since this can be understood with the assumption of 90-degree shift from the case of applying the X-axis force Fx.

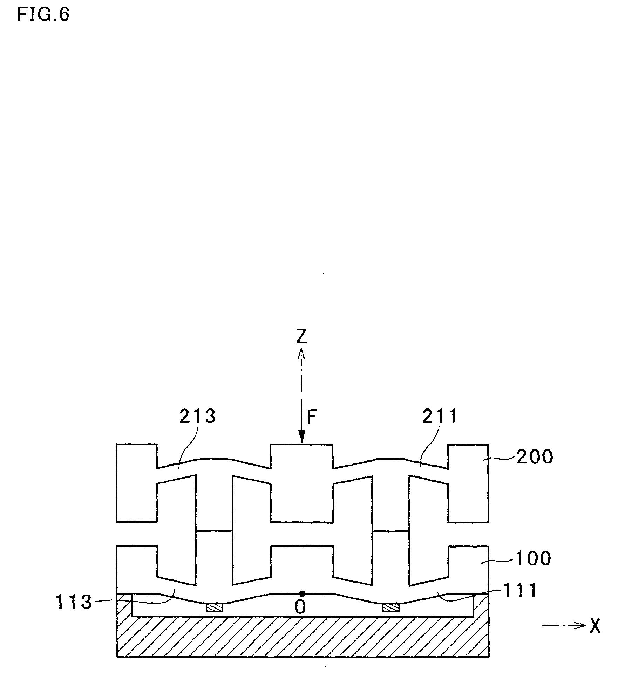

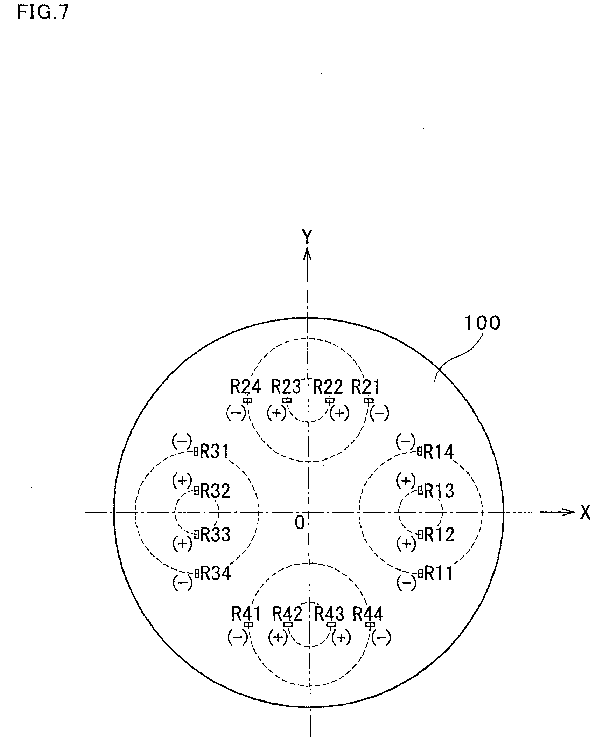

FIG. 6 shows a state of the strain gauge type sensor 1 to which a Z-axis force Fz is applied. FIG. 7 shows a change in each strain gauge in this state.

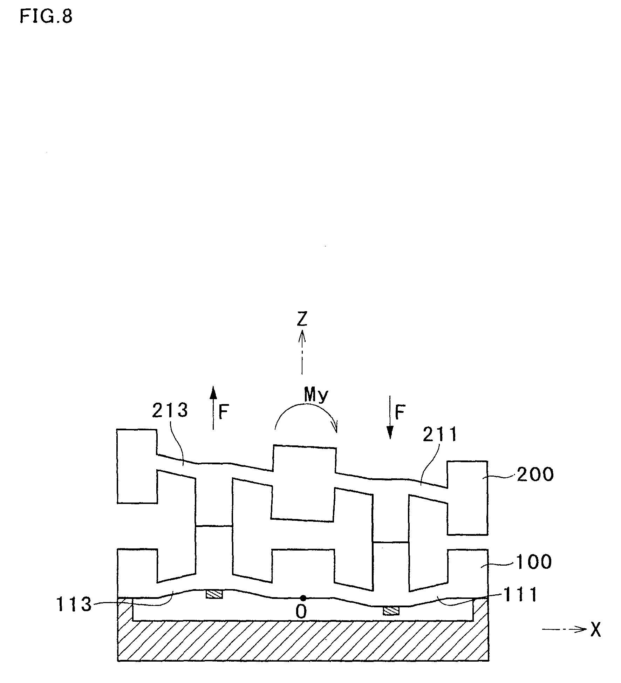

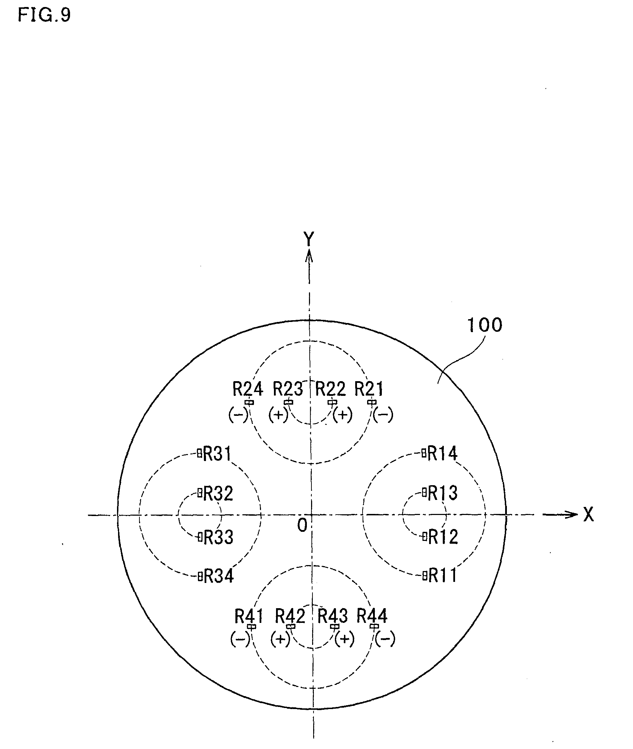

FIG. 8 shows a state of the strain gauge type sensor 1 to which a Y-axis moment My (moment about Y-axis) is applied. In this situation, the flexible portion 111 is pushed toward the fixation member 300, and the flexible portion 113 is deformed away from the fixation member 300. FIG. 9 shows a change in each strain gauge.

No description is provided for the case of applying an X-axis moment Mx since this can be understood with the assumption of 90-degree shift from the case of applying the Y-axis moment My.

In the case where a Z-axis moment Mz is applied, the connection members 121 to 124 and the connection members 221 to 224 are deflected so as to tilt in a same rotational direction along the circumference of a circle about the Z-axis.

Table 1 shows the change in resistance value of each strain gauge for each of the above-mentioned forces and moments. In the table, "+" represents an increase in the resistance value; "-" represents a decrease in the resistance value; and no sign represents very little or no change in the resistance value. For the case of each force or moment in the reverse direction, the sign is inverted.

[Table 1]

| Force | R11 | R12 | R13 | R14 | R21 | R22 | R23 | R24 |
|-------|-----|-----|-----|-----|-----|-----|-----|-----|
| Fx | 0 | 0 | 0 | 0 | - | + | - | + |
| Fy | + | - | + | - | 0 | 0 | 0 | 0 |
| Fz | - | + | + | - | - | + | + | - |
| Mx | 0 | 0 | 0 | 0 | - | + | + | - |
| My | - | + | + | - | 0 | 0 | 0 | 0 |
| Mz | - | + | - | + | - | + | - | + |

| Force | R31 | R32 | R33 | R34 | R41 | R42 | R43 | R44 |
|-------|-----|-----|-----|-----|-----|-----|-----|-----|
| Fx | 0 | 0 | 0 | 0 | + | - | + | - |
| Fy | - | + | - | + | 0 | 0 | 0 | 0 |
| Fz | - | + | + | - | - | + | + | - |
| Mx | 0 | 0 | 0 | 0 | - | + | + | - |
| My | - | + | + | - | 0 | 0 | 0 | 0 |
| Mz | - | + | - | + | - | + | - | + |

Through the use of the above-described properties, it is possible to derive the forces and moments by carrying out calculations presented in Equation 1.

[Equation 1]

$$Fx=(R22+R24-R21-R23)+(R41+R43-R42-R44)$$

$$Fy=(R11+R13-R12-R14)+(R32+R34-R31-R33)$$

$$Fz=(R12+R13-R11-R14)+(R22+R23-R21-R24)+(R32+R33-R31-R34)+(R42+R43-R41-R44)$$

$$Mx=(R22+R23-R21-R24)-(R42+R43-R41-R44)$$

$$My=(R12+R13-R11-R14)-(R32+R33-R31-R34)$$

$$Mz=(R12+R14-R11-R13)+(R22+R24-R21-R23)+(R32+R34-R31-R33)+(R42+R44-R41-R43)$$

The above Equation 1 can be expressed in another way, i.e., as presented in Equation 2.

[Equation 2]

$$Fx = (\text{force acting in positive X direction onto connection member 122 of flexible portion 112})$$
$$+ (\text{force acting in positive X direction onto connection member 124 of flexible portion 114})$$
$$Fy = (\text{force acting in positive Y direction onto connection member 121 of flexible portion 111})$$
$$+ (\text{force acting in positive Y direction onto connection member 123 of flexible portion 113})$$
$$Fz = (\text{force acting in positive Z direction onto connection member 121 of flexible portion 111})$$
$$+ (\text{force acting in positive Z direction onto connection member 122 of flexible portion 112})$$
$$+ (\text{force acting in positive Z direction onto connection member 123 of flexible portion 113})$$
$$+ (\text{force acting in positive Z direction onto connection member 124 of flexible portion 114})$$
$$Mx = (\text{force acting in positive Z direction onto connection member 122 of flexible portion 112})$$
$$- (\text{force acting in positive Z direction onto connection member 124 of flexible portion 114})$$
$$My = (\text{force acting in positive Z direction onto connection member 121 of flexible portion 111})$$
$$- (\text{force acting in positive Z direction onto connection member 123 of flexible portion 113})$$
$$Mz = (\text{force acting in negative Y direction onto connection member 121 of flexible portion 111})$$
$$+ (\text{force acting in positive X direction onto connection member 122 of flexible portion 112})$$
$$+ (\text{force acting in positive Y direction onto connection member 123 of flexible portion 113})$$
$$+ (\text{force acting in negative X direction onto connection member 124 of flexible portion 114})$$

The above description shows that: each of the strain gauges R11 to R14 and R31 to R34, disposed on the flexible portions 111 and 113 respectively, has a function of detecting the Y-axis force and the Z-axis force; and each of the strain gauges R21 to R24 and R41 to R44, disposed on the flexible portions 112 and 114 respectively, has a function of detecting the X-axis force and the Z-axis force.

The calculations of Equation 1 may be carried out directly using detected resistance values of the respective strain gauges, or may be carried out after each resistance value is converted to a voltage or current. Alternatively, the calculations may be carried out after each resistance value is converted to a digital value, by the use of an A-D conversion function of a microcomputer or a personal computer. It is a matter of course that the way of calculation is not limited to Equation 1.

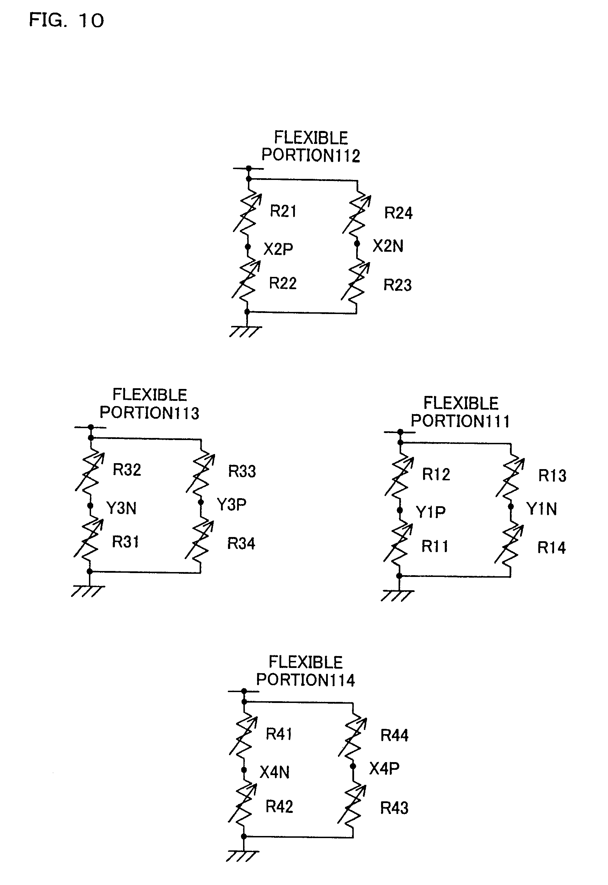

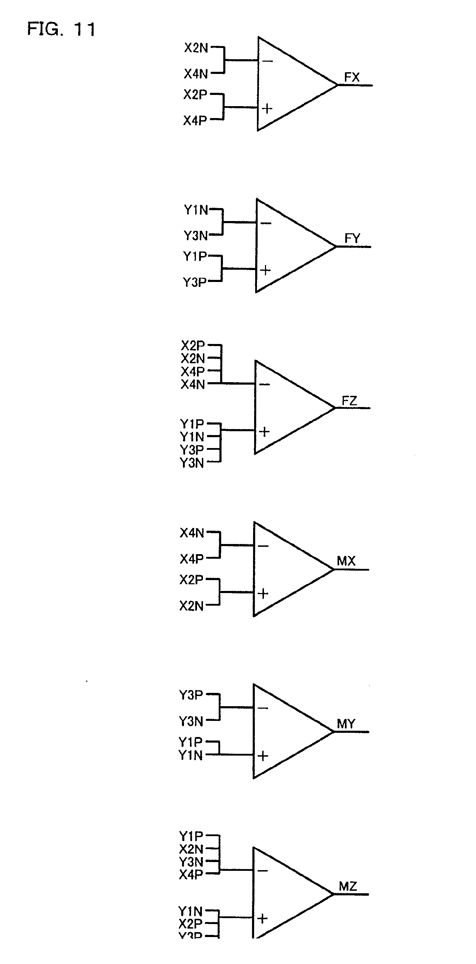

FIG. 10 is a diagram showing bridge circuits available for carrying out the calculations of Equation 1. In each of the flexible portions 111 to 114, two half-bridge circuits are formed, and driven at a constant voltage. Here, a node voltage between the strain gauges R11 and R12 is defined as Y1P, and a node voltage between the strain gauges R13 and R14 is defined as Y1N. Likewise, node voltages X2P, X2N, Y3P, Y3N, X4P, and X4N are defined as shown in FIG. 10. Fx, Fy, Fz, Mx, My, and Mz are obtained by inputting these node voltages, through not-shown lead wires, into arithmetic elements such as an operational amplifier, as shown in FIG. 11. It should be noted that the operations corresponding to FIG. 11 may be carried out with a microcomputer, personal computer, or the like, after the node voltages are amplified and then input into an A-D converter.

As described above, the strain gauge type sensor 1 of this embodiment is, by the use of four strain gauges arranged on one plane, capable of detecting: (i) a force in a direction parallel to the direction in which the strain gauges are arranged on the plane; and (ii) a force in a direction perpendicular to the plane. Accordingly, there is no need to provide strain gauges for detection individually for each of the forces in the two directions. The use of the four strain gauges in this way reduces the number of strain gauges for detecting the forces in the two directions. As a result, the circuit configuration is simplified, including bridge circuits and lands for fixing thereto lead wires from each bridge circuit. This facilitates downsizing of the sensor.

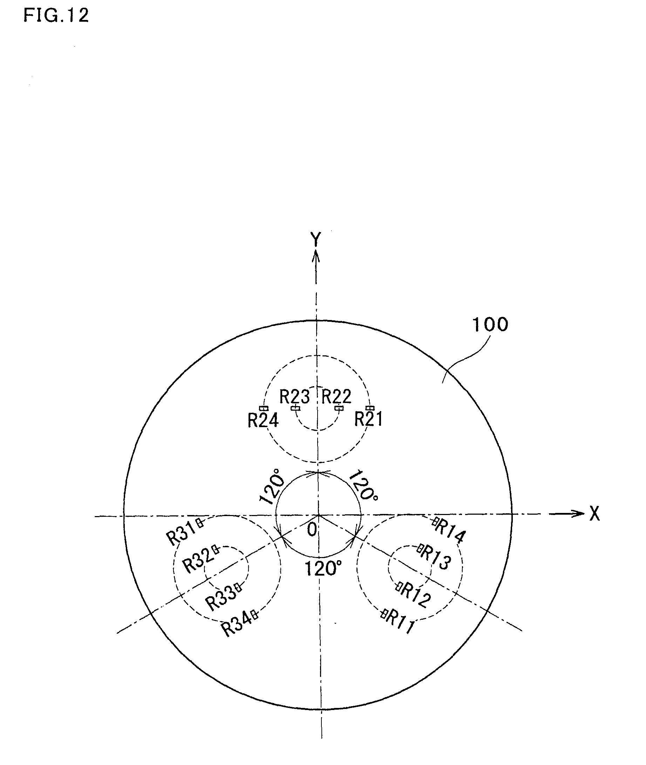

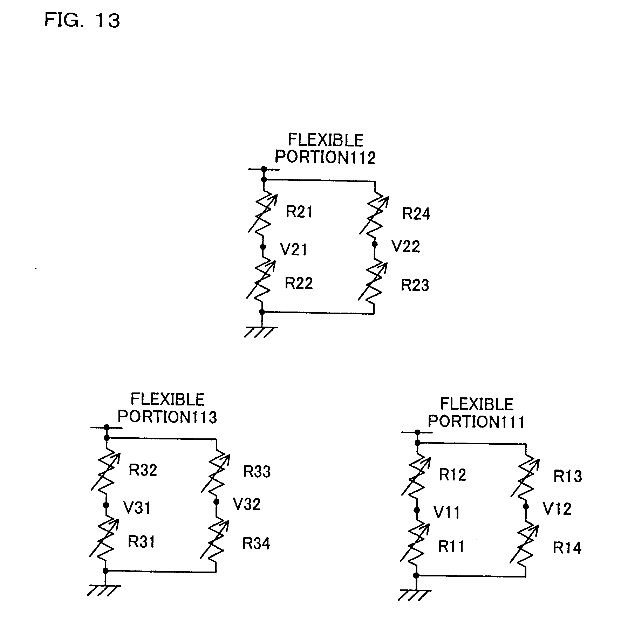

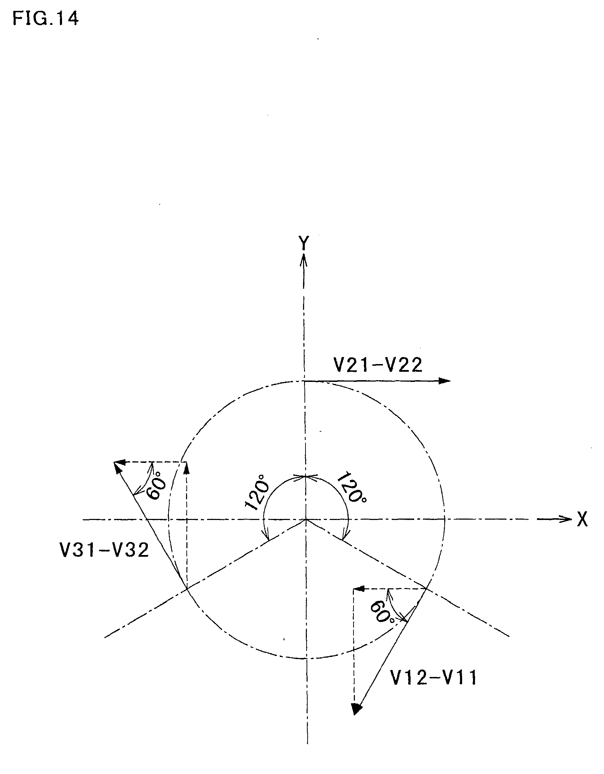

The following describes a second embodiment of the present invention, with reference to FIGs. 12 to 14. FIG. 12 is a diagram showing an arrangement of strain gauges of a strain gauge type sensor according to the second embodiment of the present invention. FIG. 13 is a diagram showing bridge circuits available for carrying out calculations in the strain gauge type sensor of FIG. 12. FIG. 14 is a diagram showing decomposition into vectors in an X-direction, a Y-direction, and a Z-direction, respectively.

The strain gauge type sensor of the second embodiment is different from the strain gauge type sensor 1 of the first embodiment mainly in the arrangement and number of strain gauges on the under surface of the first flange 100. That is, in the first embodiment, four sets each containing a flexible portion and four strain gauges are disposed at intervals of 90 degrees, while in the second embodiment, three sets each containing a flexible portion and four strain gauges are disposed at intervals of 120 degrees. Because of this, first and second flanges have three connection members disposed at positions respectively corresponding to three sets of flexible portions.

In this embodiment, three flexible portions 111 to 113 are respectively disposed at: a position corresponding to a first line at 30 degrees from a positive X-axis to a negative Y-axis; a position corresponding to a positive Y-axis; and a position corresponding to a second line at 30 degrees from a negative X-axis to the negative Y-axis. Four strain gauges R11 to R14 disposed on the flexible portion 111 are arranged in a direction orthogonal to the first line; four strain gauges R21 to R24 disposed on the flexible portion 112 are arranged in a direction orthogonal to the Y-axis; and four strain gauges R31 to R34 disposed on the flexible portion 113 are arranged in a direction orthogonal to the second line.

When a force or moment Fx, Fy, Fz, Mx, My, Mz is applied to a second flange 200 as in the first embodiment, a change is caused in the resistance value of each strain gauge, as shown in Table 2.

[Table 2]

| Force | R11 | R12 | R13 | R14 | R21 | R22 | R23 | R24 |
|---|---|---|---|---|---|---|---|---|
| Fx | + | - | + | - | - | + | - | + |
| Fy | + | - | + | - | 0 | 0 | 0 | 0 |
| Fz | - | + | + | - | - | + | + | - |
| Mx | + | - | - | + | - | + | + | - |
| My | - | + | + | - | 0 | 0 | 0 | 0 |
| Mz | - | + | - | + | - | + | - | + |

| Farce | R31 | R32 | R33 | R34 |
|---|---|---|---|---|
| Fx | + | - | + | - |
| Fy | - | + | - | + |
| Fz | - | + | + | - |
| Mx | + | - | - | + |
| My | + | - | - | + |
| Mz | - | + | - | + |

In the table, "+" represents an increase in the resistance value; "-" represents a decrease in the resistance value; and no sign represents very little or no change in the resistance value. For the case of each force or moment in the reverse direction, the sign is inverted.

As shown in FIG. 13, in each of the flexible portions 111 to 113, two half-bridge circuits are formed, and driven at a constant voltage. A node voltage between the strain gauges R11 and R12 is defined as V11, and a node voltage between the strain gauges R13 and R14 is defined as V12. Likewise, node voltages V21, V22, V31, and V32 are defined. Fx, Fy, Fz, Mx, My, and Mz are obtained by inputting these node voltages, through not-shown lead wires, into arithmetic elements such as an operational amplifier, as in the first embodiment.

Here, a force to tilt each connection member and a force acting in a Z-axis direction are detected based on the change in the resistance value of each of the strain gauges R11 to R14, R21 to R24, and R31 to R34. When each connection member is tilted in the direction in which the associated strain gauges are arranged (arrangement direction), the change in the resistance value of each of the strain gauges is the greatest, so that the best sensor sensitivity is provided.

As a result of consideration of the directions related to the sensitivity of the strain gauges R11 to R14, R21 to R24, and R31 to R34, a vector diagram shown in FIG. 14 is presented. Therefore, a force to tilt a connection member

EP 2 060 894 A1

121 of the flexible portion 111 in the arrangement direction of the strain gauges thereon is expressed by V12-V11; a force acting in the Z-axis direction onto the connection member 121 of the flexible portion 111 is expressed by V11+V12; a force to tilt a connection member 122 of the flexible portion 112 in the arrangement direction of the strain gauges thereon is expressed by V21-V22; a force acting in the Z-axis direction onto the connection member 122 of the flexible portion 112 is expressed by -(V21+V22); a force to tilt a connection member 123 of the flexible portion 113 in the arrangement direction of the strain gauges thereon is expressed by V31-V32; and a force acting in the Z-axis direction onto the connection member 123 of the flexible portion 113 is expressed by V31+V32.

Here, regarding the force acting in the Z-axis direction onto the connection member 121 of the flexible portion 111 and the force acting in the Z-axis direction onto the connection member 123 of the flexible portion 113, V11+V12 and V31+V32 each increases in response to a force acting in a positive Z-axis direction (a direction in which each connection member departs from a fixation member 300). On the other hand, as for the force acting in the Z-axis direction onto the connection member 122 of the flexible portion 112, V21+V22 decreases in response to a force acting in the positive Z-axis direction (a direction in which the connection member departs from the fixation member 300). Accordingly, the expression has a "-"(negative) sign, in consideration of polarity.

Based on the concept of the aforementioned Equation 2 and the vector diagram of FIG. 14, it is possible to derive the forces and moments by carrying out calculations presented in Equation 3, respectively.

[Equation 3]

$$Fx = (V21 - V22) - (V12 - V11)/2 - (V31 - V32)/2$$

$$Fy = -\frac{\sqrt{3}}{2}(V12 - V11) + \frac{\sqrt{3}}{2}(V31 - V32)$$

$$Fz = (V11 + V12) - (V21 + V22) + (V31 + V32)$$

$$Mx = (V11 + V12) + (V21 + V22) + (V31 + V32)$$

$$My = (V11 + V12) - (V31 + V32)$$

$$Mz = (V12 - V11) + (V21 - V22) + (V31 - V32)$$

Therefore, it is possible to obtain similar advantageous effects to those of the first embodiment.

Hereinbefore, preferred embodiments of the present invention have been described. However, the present invention is not limited to the above-described embodiments, and various changes in design can be made within the scope of the claims. For example, in the first and second embodiments, description has been made about a strain gauge type sensor which detects six-axis forces/moments; however, the present invention is not limited thereto. The sensor of the present invention may be a strain gauge type sensor which detects six-axis acceleration/angular acceleration, or may be used as a two-axis sensor which detects forces in only two directions of X- and Y-axes. In addition, sets, each containing four strain gauges, a flexible portion of the first flange 100, a flexible portion of the second flange 200, and connection members, are disposed at intervals of 90 degrees or 120 degrees about the Z-axis and at the same distance from the Z-axis, but the present invention is not limited to this. Furthermore, the thickness or the size of the flexible portions (111 to 114, 211 to 214) may be different from one another, however, it is preferable that these are same in thickness and in size. Moreover, the first flange 100 and the second flange 200 may be different in size from each other, and may be made of silicone rubber or a synthetic resin. Each connection member may be formed with the associated flange into one member.

In the above-described first and second embodiments, each flexible portion has four strain gauges arranged in a line. However, each flexible portion may have two strain gauges arranged in a line. Thus, it is possible to detect forces and moments even when, in FIG. 10 of the first embodiment, for example, R12, R13, R22, R23, R32, R33, R42, and R43 are respectively replaced to fixed resistors, to form half bridges each having one active element. That is, in this case, the flexible portion 111 has two strain gauges R11 and R14, the flexible portion 112 has two strain gauges R21 and R24, the flexible portion 113 has two strain gauges R31 and R34, and the flexible portion 114 has two strain gauges R41 and R44. Likewise, it is possible to detect forces and moments even when, in FIG. 13 of the second embodiment, for example, R12, R13, R22, R23, R32 and R33 are respectively replaced to fixed resistors, to form half bridges each having one active element. However, it should be noted that a greater temperature characteristic is provided to the sensor in the case where each portion has four strain gauges arranged in a line, compared with the case where each portion has two strain gauges arranged in a line. In the above examples, similar advantageous effects are provided even when the strain gauges are replaced to fixed resistor, and the fixed resistors are replaced to strain gauges.

Brief Description of the Drawings

[FIG. 1] A longitudinal cross-sectional front view, passing through a center, of a strain gauge type sensor of a first embodiment of the present invention.
[FIG. 2] A cross-sectional view taken along line A-A in FIG. 1.
[FIG. 3] A diagram showing an arrangement of strain gauges.
[FIG. 4] A diagram showing a state of the strain gauge type sensor to which an X-axis force Fx is applied.
[FIG. 5] A diagram showing a change in each strain gauge in the state of FIG. 4.
[FIG. 6] A diagram showing a state of the strain gauge type sensor to which a Z-axis force Fz is applied.
[FIG. 7] A diagram showing a change in each strain gauge in the state of FIG. 6.
[FIG. 8] A diagram showing a state of the strain gauge type sensor to which a Y-axis moment My is applied.
[FIG. 9] A diagram showing a change in each strain gauge in the state of FIG. 8.
[FIG. 10] A diagram showing bridge circuits available for carrying out calculations in the strain gauge type sensor of FIG. 1.
[FIG. 11] A diagram showing a manner in which node voltages are input into arithmetic elements.
[FIG. 12] A diagram showing an arrangement of strain gauges of a strain gauge type sensor of the second embodiment of the present invention.
[FIG. 13] A diagram showing bridge circuits available for carrying out calculations in the strain gauge type sensor of FIG. 12.
[FIG. 14] A diagram showing decomposition into vectors in an X-direction, a Y-direction, and a Z-direction, respectively.

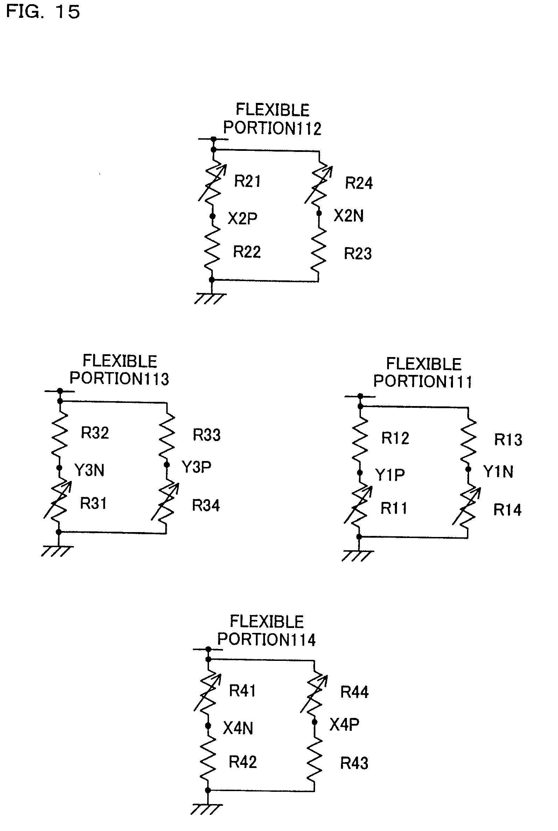

[FIG. 15] A diagram showing a modified example of the bridge circuits available for carrying out calculations.

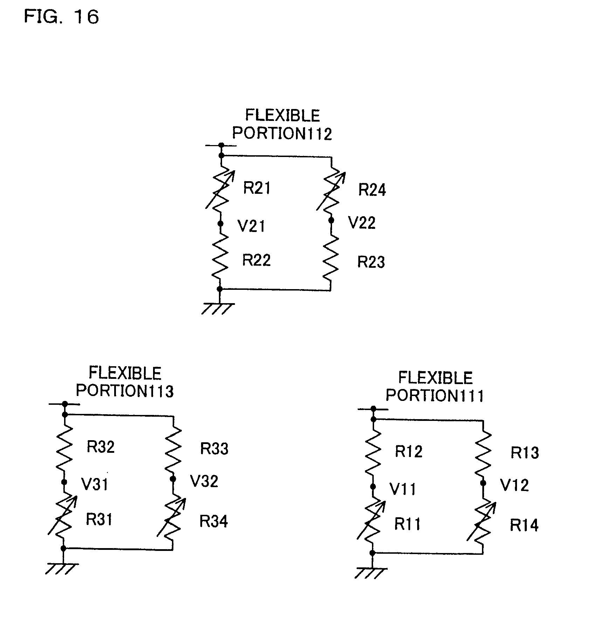

[FIG. 16] A diagram showing another modified example of the bridge circuits available for carrying out calculations.

Reference Numerals

1: strain gauge type sensor
100: first flange
111: to 114 flexible portion
121 to 124: connection member
200: second flange
211 to 214: flexible portion
221 to 224: connection member
300: fixation member
R11 to R14, R21 to R24, R31 to R34, R41 to R44: strain gauge

**Claims**

**1.** A strain gauge type sensor, comprising:

a first member having a first flexible portion where two or four strain gauges are arranged in a line on one plane;
a second member having a second flexible portion facing the first flexible portion; and
a connection member which connects the first flexible portion with the second flexible portion; wherein
the sensor senses: a force in a direction parallel to a direction in which the two or four strain gauges are arranged on the plane; and a force in a direction perpendicular to the plane, based on a change in a resistance value of each of the two or four strain gauges.

**2.** The strain gauge type sensor according to claim 1, wherein:

an outer diameter of the connection member is smaller than that of the first flexible portion; and
the two or four strain gauges are disposed at a position corresponding to an outer end of the first flexible portion
and a position corresponding to an outer end of the connection member.

3.  The strain gauge type sensor according to claim 2, wherein the two or four strain gauges are arranged symmetrically
    with respect to a central position of the first flexible portion.

4.  The strain gauge type sensor according to any one of claims 1 to 3,
    comprising several sets each containing: the two or four strain gauges; the first flexible portion; the second flexible
    portion; and the connection member; wherein
    the several sets each containing the two or four strain gauges, the first flexible portion, the second flexible portion,
    and the connection member, are disposed at equiangular intervals about a central point on the plane and at a same
    distance from the central point.

5.  The strain gauge type sensor according to claim 4, wherein each of the intervals is 90 degrees.

6.  The strain gauge type sensor according to claim 5, wherein the several sets each containing the two or four strain
    gauges and the first flexible portion are respectively disposed at positions corresponding to: a positive X-axis, a
    positive Y-axis, a negative X-axis, and a negative Y-axis, where the X- and Y-axes have their origin at the central point.

7.  The strain gauge type sensor according to claim 6, wherein the two or four strain gauges disposed at the position
    corresponding to each of the positive X-axis and the negative X-axis are arranged in a direction orthogonal to the
    X-axis, and the two or four strain gauges disposed at the position corresponding to each of the positive Y-axis and
    the negative Y-axis are arranged in a direction orthogonal to the Y-axis.

8.  The strain gauge type sensor according to claim 4, wherein each of the intervals is 120 degrees.

9.  The strain gauge type sensor according to claim 8, wherein the several sets each containing the two or four strain
    gauges and the first flexible portion are respectively disposed at: a position corresponding to a first line being at 30
    degrees from a positive X-axis to a negative Y-axis; a position corresponding to a second line being at 30 degrees
    from a negative X-axis to the negative Y-axis; and a position corresponding to a positive Y-axis, where the X- and
    Y-axes have their origin at the central point.

10. The strain gauge type sensor according to claim 9, wherein the two or four strain gauges disposed at the position
    corresponding to the first line are arranged in a direction orthogonal to the first line; the two or four strain gauges
    disposed at the position corresponding to the second line are arranged in a direction orthogonal to the second line;
    and the two or four strain gauges disposed at the position corresponding to the positive Y-axis are arranged in a
    direction orthogonal to the Y-axis.

EP 2 060 894 A1

FIG. 1

11

FIG. 2

FIG.3

FIG.4

EP 2 060 894 A1



FIG.5

FIG.6

FIG.7

FIG.8

FIG.9

FIG. 10

FLEXIBLE
PORTION112

R21    R24

X2P    X2N

R22    R23

FLEXIBLE
PORTION113

R32    R33

Y3N    Y3P

R31    R34

FLEXIBLE
PORTION111

R12    R13

Y1P    Y1N

R11    R14

FLEXIBLE
PORTION114

R41    R44

X4N    X4P

R42    R43

FIG. 11

X2N
X4N — $-$
X2P
X4P — $+$ — FX

Y1N
Y3N — $-$
Y1P
Y3P — $+$ — FY

X2P
X2N
X4P
X4N — $-$
Y1P
Y1N
Y3P
Y3N — $+$ — FZ

X4N
X4P — $-$
X2P
X2N — $+$ — MX

Y3P
Y3N — $-$
Y1P
Y1N — $+$ — MY

Y1P
X2N
Y3N
X4P — $-$
Y1N
X2P
Y3P — $+$ — MZ

FIG.12

FIG. 13

FIG.14

FIG. 15

FLEXIBLE
PORTION112

R21   R24
X2P   X2N
R22   R23

FLEXIBLE
PORTION113

R32   R33
Y3N   Y3P
R31   R34

FLEXIBLE
PORTION111

R12   R13
Y1P   Y1N
R11   R14

FLEXIBLE
PORTION114

R41   R44
X4N   X4P
R42   R43

FIG. 16

FLEXIBLE
PORTION112

R21  V21  R22

R24  V22  R23

FLEXIBLE
PORTION113

R32  V31  R31

R33  V32  R34

FLEXIBLE
PORTION111

R12  V11  R11

R13  V12  R14

## INTERNATIONAL SEARCH REPORT

| International application No. |
|---|
| PCT/JP2007/067301 |

A.   CLASSIFICATION OF SUBJECT MATTER
*G01L5/16*(2006.01)i

According to International Patent Classification (IPC) or to both national classification and IPC

B.   FIELDS SEARCHED

Minimum documentation searched (classification system followed by classification symbols)
G01L5/16

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X | JP 2005-31062 A (Nitta Corp.), 03 February, 2005 (03.02.05), Full text; all drawings & EP 1645859 A1     & US 2006/0174718 A1 & WO 2004/111592 A1 | 1-10 |
| A | JP 2003-4562 A (Alps Electric Co., Ltd.), 08 January, 2003 (08.01.03), Par. Nos. [0005] to [0006], [0024] to [0028]; Figs. 8, 14 to 15 & US 2002/0190949 A1 Par. Nos. [0009] to [0010], [0043] to [0047]; Figs. 8, 14 to 15 | 1-10 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 September, 2007 (25.09.07) | 09 October, 2007 (09.10.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2007/067301 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 5-75055 B2  (NEC Corp.),<br>19 October, 1993 (19.10.93),<br>Page 3, right column, lines 7 to 29; Fig. 1<br>(Family: none) | 1-10 |
| A | JP 2581820 B2  (Kabushiki Kaisha Fuji Denki<br>Sogo Kenkyusho),<br>12 February, 1997 (12.02.97),<br>Page 4, left column, lines 2 to 42; Figs. 1,<br>3, 6<br>(Family: none) | 1-10 |
| A | JP 7-174786 A  (Fujikura Ltd.),<br>14 July, 1995 (14.07.95),<br>Par. Nos. [0009] to [0012]; Fig. 1<br>(Family: none) | 1-10 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005031062 A